# EUROPEAN PATENT SPECIFICATION

(11) **EP 1 006 619 B1**
(45) Date of publication and mention of the grant of the patent: **15.02.2006**
(21) Application number: 99203665.7
(22) Date of filing: 05.11.1999
(51) Int. Cl.: H01R 13/627, H01R 13/629, G02B 6/38, G02B 6/42

(54) **Two-part electrical or optical connector**
Zweiteiliger elektrischer oder optischer Steckverbinder
Connecteur électrique ou optique en deux parties

(30) Priority: 03.12.1998 GB 9826547
(43) Date of publication of application: 07.06.2000
(73) Proprietor: Delphi Technologies, Inc., Troy, MI 48007 (US)
(72) Inventor: Halbach, Paul Gerherd, 42369 Wuppertal (DE); Wisniewski, Reinhold, 42899 Remscheid (DE); Sikora, Andreas, 58099 Hagen (DE); Carstens, Detlef, 48249 Dulmen (DE); Vom Dorff, Thomas, 42655 Solingen (DE)
(74) Representative: Denton, Michael John

(56) References cited:
- EP-A- 0 989 633
- EP-B- 0 581 638
- EP-B- 0 625 809
- US-A- 5 429 527

## Description

### Technical Field

The present invention relates to a two-part electrical or optical connector having a locking member.

### Background of the Invention

Known electrical and/or optical connectors are susceptible to tolerance problems, and hence problems achieving a good connection, when mated with a corresponding connector. Such a problem is especially known where a seal is required between the connectors. EP-B-0581638 discloses a connector in accordance with the preamble of Claim 1. EP-B-0625809 discloses a connector with a locking member having a latch tab engageable in apertures.

### Summary of the Invention

The object of the present invention is to overcome the above mentioned problem.

A two-part electrical or optical connector in accordance with the present invention is characterised by the features specified in Claim 1.

The present invention provides an arrangement in which any axially clearance between the male and female connectors is reduced to a minimum to overcome any tolerance problems.

### Brief Description of the Drawings

The present invention will now be described, by way of example, with reference to the accompanying drawings, in which:-
Figure 1 is a perspective view of the female connector of a two-part optical connector in accordance with the present invention;
Figure 2 is a top view of the female connector shown in Figure 1;
Figure 3 is a bottom view of the female connector shown in Figure 1;
Figure 4 is a cross-sectional view on the line IV-IV of Figure 2;
Figure 5 is a cross-sectional view on the line V-V of Figure 2;

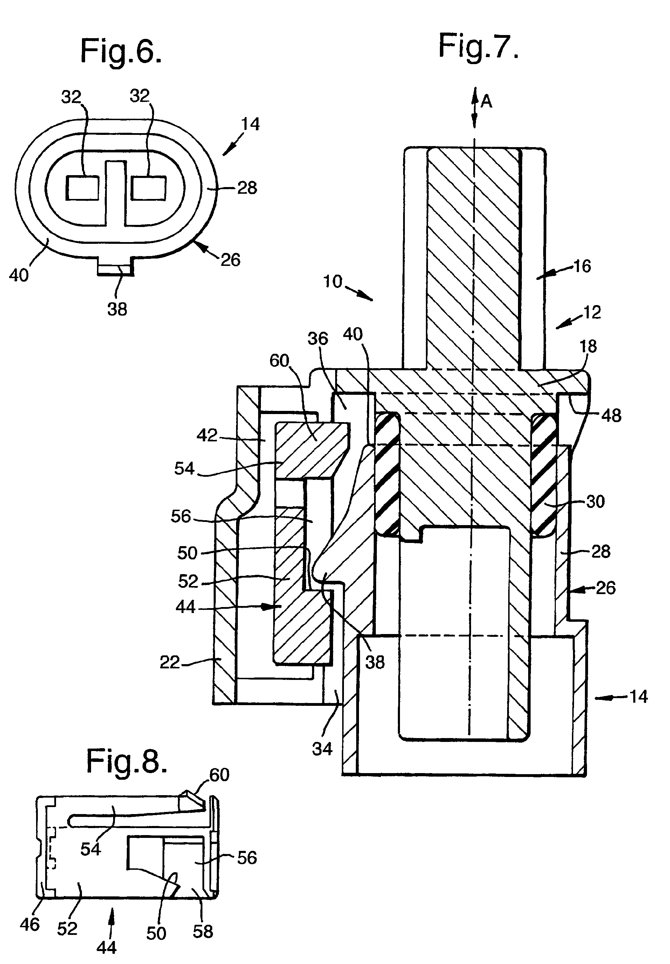

Figure 6 is a top view of the male connector of the two-part optical connector;
Figure 7 is a cross-sectional view on the line VII-VII of Figure 3, with the male connector of Figure 6 partially inserted; and
Figure 8 is a side view of the locking member of the female connector of Figure 1.

### Description of the Preferred Embodiment

Referring to the drawings, an embodiment of the present invention is described in the form of a two-part optical connector 10. The present invention may also be a two-part electrical connector. The two-part optical connector 10 comprises a female connector 12 and a male connector 14 which can be mated together. The female connector 12 includes a housing 16 having a cylindrical portion 18 with a pair of through bores 20. The through bores 20 extend in an axial direction A, which is the same as the mating direction for the female and male connectors 12,14. An optical fibre, with or without a ferrule, (not shown) can be secured and retained in each through bore 20. The cylindrical portion 18 is integral with an outer portion 22 which partially surrounds the cylindrical portion to define a gap 24 between the cylindrical portion and the outer portion.

The male connector 14 includes a housing 26 having a cylindrical portion 28 which fits around the cylindrical portion 18 of the female connector 12. An annular seal 30 may be located between the cylindrical portions 18,28. The cylindrical portion 28 of the male connector 14 has through bores 32 for receiving optical fibres, with or without optical ferrules, (not shown). On mating of the male and female connectors 14,12, the respective through bores 32,20 align, and the ends of the optical fibres in the aligned through bores are positioned adjacent one another.

An axially extending slot 34 is formed in the inner surface 36 of the outer portion 22 of the housing 16 of the female connector 12. The slot 34 opens into the gap 24. A tab 38 is formed on the cylindrical portion 28 of the housing 26 of the male connector 14. The tab 38 extends away from the cylindrical portion 28 in a radial direction. On mating of the male and female connectors 14,12, the tab 38 makes a sliding fit in the slot 34.

A through bore 42 is formed in the outer portion 22 of the housing 16 of the female connector 12. The through bore 42 extends in a direction which is substantially perpendicular to the axial direction A. The slot 34 opens into the through bore 42. On mating of the male and female connectors 14,12, the tab 38 extends through the slot 34 into the through bore 42.

A locking member 44 is slidably mounted in the through bore 42. The locking member 44 includes a head portion 46 at one end which is positioned outside the through bore 42, a wall member 52 extending away from the head, and a resilient latch arm 54 extending away from the head. The latch arm 54 and the wall member 52 are positioned adjacent one another in the axial direction A. The wall member 52 has a channel 56 formed therein which is open at one end 58 and has an angled side edge defining a shoulder 50. The open end 58 is on the opposite side to the latch arm 54. The latch arm 54 has a latch tab 60 at its free end. The latch tab 60 and the open end 58 of the channel 56 are preferably substantially aligned in the axial direction A.

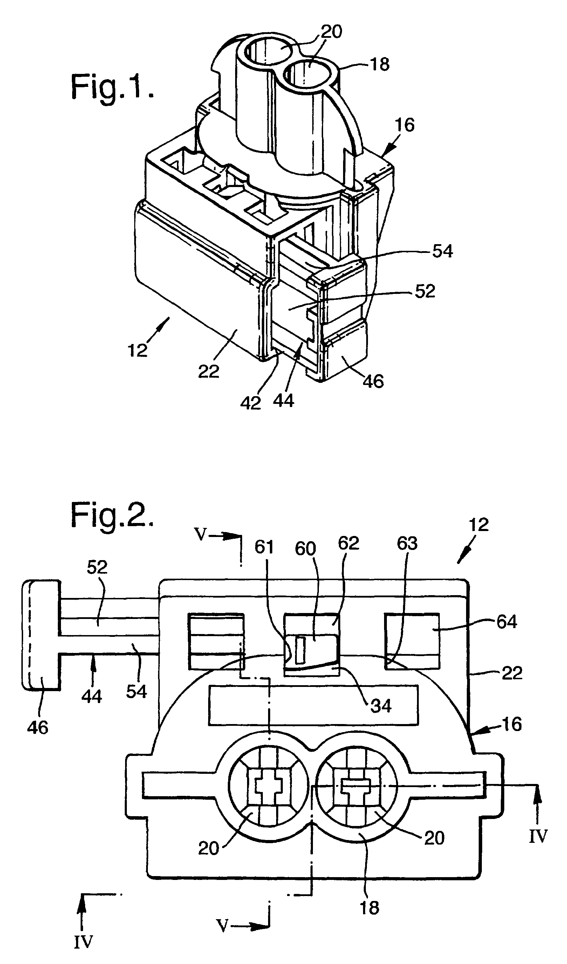

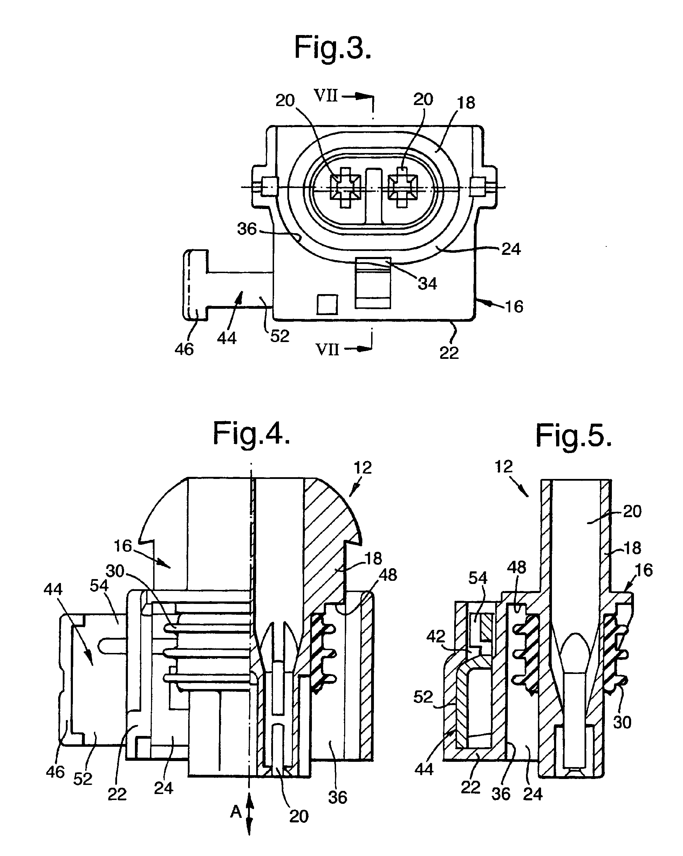

Prior to mating of the male and female connector 14,12, the locking member 44 is positioned as shown in Figures 1 to 3, with the head portion 46 spaced from the outer portion 22 of the housing 16 of the female connector. The locking member 44 is held in this pre-assembly position by the latch tab 60 which makes a snap-fit with an edge 61 of a corresponding first aperture 62 in the housing 16 of the female connector 12. The first aperture 62 and the slot 34 are preferably substantially aligned in the axial direction A. On initial mating of the female and male connectors 12,14, the tab 38 on the housing 26 of the male connector passes through the open end 58 and into the channel 56. Further movement of the male connector 14 in the mating direction brings the tab 38 on the housing 26 of the male connector into contact with the latch tab 60 to move the latch tab out of engagement with the edge 61 of the first aperture 62. Next, the head 46 of the locking member 44 is pushed towards the outer portion 22 of the housing 16 of the female connector 12 until the latch tab 60 makes a snap-fit with the edge 63 of a second aperture 64 in the housing of the female connector to hold the locking member 44 in this fully assembled position. The second aperture 64 is spaced from the first aperture 62 in a direction substantially perpendicular to the axial direction A. This movement of the locking member 44 brings the shoulder 50 of the channel 56 into engagement with the tab 38 of the housing 26 of the male connector 14 to exert a force on the male connector in the mating direction. In this fully mated position, the upper surface 40 of the housing 26 of the male connector 14 is in engagement with a corresponding surface 48 of the housing 16 of the female connector 12.

With the present invention, any axial gap between the male and female connectors 14,12 on mating of the connectors, and hence an axial gap between the ends of the aligned optical fibres, is reduced to a minimum by the engagement of the locking member 44 with the tab 38 on the housing 26 of the male connector. This arrangement has significant advantages for connecting optical fibres where it is desired to have a minimal axial separation for efficient light transmission. In the present invention, the locking member 44 provides the dual function of releasably latching the male and female connectors 14,12 in the mated position, and of exerting a biasing force on the male connector in the mating direction.

## Claims

1. A two-part electrical or optical connector (10) comprising a female connector (12), a male connector (14), and a locking member (44); the female connector including a housing (16) with a cylindrical portion (18) and an outer portion (22) at least partially surrounding the cylindrical portion to define a gap (24) therebetween, the cylindrical portion extending in an axial direction (A), a bore (42) extending through the outer portion in a direction substantially perpendicular to the axial direction, and a slot (34) extending in the axial direction and opening into the gap and the bore; the male connector including a housing (26) at least partly positionable in the gap and having a tab (38) locatable in, and extending through, the slot; the locking member making a sliding fit in the bore in the outer portion of the housing of the female connector and including a latch tab (60) which makes a snap-fit with a first edge (61) on the housing of the female connector in a pre-assembled position of the locking member and a snap-fit with a second edge (63) on the housing of the female connector in a fully assembled position of the locking member, and a shoulder (50) which engages the tab on the housing of the male connector in the fully assembled position of the locking member to hold the male and female connectors in a fully mated position; **characterised in that** the tab (38) on the housing (26) of the male connector (14) is engageable with the latch tab (60) in the pre-assembled position of the locking member (44) to release the snap-fit of the latch tab with the first edge (61).

2. A two-part electrical or optical connector as claimed in Claim 1, wherein the locking member (44) comprises a wall member (52) and a resilient latch arm (54) which are positioned adjacent one another and spaced apart in the axial direction (A), the latch tab (60) being located at the free end of the latch arm, and the shoulder (50) being formed on the wall member.

3. A two-part electrical or optical connector as claimed in Claim 1 or Claim 2, wherein the locking member (44) comprises a channel (56) having an open end (58) for receiving the tab (38) on the housing (26) of the male connector (14), the channel having an angled side edge defining the shoulder (50) engageable with the tab.

4. A two-part electrical or optical connector as claimed in Claim 3, wherein the open end (58) of the channel (56) and the latch tab (60) are aligned in the axial direction.

5. A two-part electrical or optical connector as claimed in any one of Claims 1 to 4, wherein the first edge (61) is defined by a first aperture (60) in the housing (16) of the female connector (12), and the second edge (63) is defined by a second aperture (64) in the housing of the female connector, the first and second apertures being spaced apart in a direction substantially perpendicular to the axial direction (A).

## Revendications

1. Connecteur électrique ou optique en deux parties (10) comprenant un connecteur femelle (12), un connecteur mâle (14), et un élément de verrouillage (44) ; le connecteur femelle comprenant un boîtier (16) avec une partie cylindrique (18) et une partie externe (22) entourant au moins partiellement la partie cylindrique pour définir un intervalle (24) entre elles, la partie cylindrique s'étendant dans une direction axiale (A), un alésage (42) s'étendant à travers la partie externe dans une direction sensiblement perpendiculaire à la direction axiale, et une fente (34) s'étendant dans la direction axiale et s'ouvrant dans l'intervalle et l'alésage ; le connecteur mâle comprenant un boîtier (26) au moins partiellement positionnable dans l'intervalle et ayant une languette (38) pouvant être placée dans, et s'étendant à travers, la fente ; l'élément de verrouillage réalisant un emboîtage coulissant dans l'alésage dans la partie externe du boîtier du connecteur femelle et comprenant une languette de verrouillage (60) qui réalise un emboîtement par pression avec un premier bord (61) sur le boîtier du connecteur femelle dans une position préassemblée de l'élément de verrouillage et un emboîtement par pression avec un second bord (63) sur le boîtier du connecteur femelle dans une position entièrement assemblée de l'élément de verrouillage, et un épaulement (50) qui vient en prise avec la languette sur le boîtier du connecteur mâle dans la position entièrement assemblée de l'élément de verrouillage pour tenir les connecteurs mâle et femelle dans une position entièrement accouplée ; **caractérisé en ce que** la languette (38) sur le boîtier (26) du connecteur mâle (14) peut venir en prise avec la languette de verrouillage (60) dans la position préassemblée de l'élément de verrouillage (44) pour libérer l'emboîtement par pression de la languette de verrouillage avec le premier bord (61).

2. Connecteur électrique ou optique en deux parties selon la revendication 1, dans lequel l'élément de verrouillage (44) comprend un élément paroi (52) et un bras de verrouillage résilient (54) qui sont positionnés à côté l'un de l'autre et espacés dans la direction axiale (A), la languette de verrouillage (60) étant située à l'extrémité libre du bras de verrouillage, et l'épaulement (50) étant formé sur l'élément paroi.

3. Connecteur électrique ou optique en deux parties selon la revendication 1 ou 2, dans lequel l'élément de verrouillage (44) comprend un canal (56) ayant une extrémité ouverte (58) pour recevoir la languette (38) sur le boîtier (26) du connecteur mâle (14), le canal ayant un bord latéral angulaire définissant l'épaulement (50) pouvant venir en prise avec la languette.

4. Connecteur électrique ou optique en deux parties selon la revendication 3, dans lequel l'extrémité ouverte (58) du canal (56) et la languette de verrouillage (60) sont alignées dans la direction axiale.

5. Connecteur électrique ou optique en deux parties selon l'une quelconque des revendications 1 à 4, dans lequel le premier bord (61) est défini par une première ouverture (60) dans le boîtier (16) du connecteur femelle (12), et le second bord (63) est défini par une seconde ouverture (64) dans le boîtier du connecteur femelle, les première et seconde ouvertures étant espacées dans une direction sensiblement perpendiculaire à la direction axiale (A).

## Patentansprüche

1. Zweiteiliger elektrischer oder optischer Verbinder (10), umfassend einen Buchsenverbinder (12), einen Steckerverbinder (14) und ein Verriegelungselement (44), wobei der Buchsenverbinder ein Gehäuse (16) mit einem zylindrischen Abschnitt (18) und einem äußeren Abschnitt (22), der den zylindrischen Abschnitt zumindest teilweise umgibt, so dass ein Zwischenraum (24) dazwischen definiert ist, wobei der zylindrische Abschnitt sich in einer axialen Richtung (A) erstreckt, eine Bohrung (42), die sich durch den äußeren Abschnitt in einer Richtung im Wesentlichen senkrecht zu der axialen Richtung erstreckt, und einen Schlitz (34) umfasst, der sich in der axialen Richtung erstreckt und in den Zwischenraum und in die Bohrung öffnet, wobei der Steckerverbinder ein Gehäuse (26) umfasst, das zumindest teilweise in dem Zwischenraum positionierbar ist und eine Nase (38) aufweist, die in dem Schlitz angeordnet werden kann und sich durch diesen erstreckt, wobei das Verriegelungselement einen Schiebesitz in der Bohrung in dem äußeren Abschnitt des Gehäuses des Buchsenverbinders herstellt und eine Verriegelungsnase (60), die einen Schnappsitz mit einer ersten Kante (61) des Gehäuses des Buchsenverbinders in einer vormontierten Position des Verriegelungselements und einen Schnappsitz mit einer zweiten Kante (63) an dem Gehäuse des Buchsenverbinders in einer vollständig montierten Position des Verriegelungselements herstellt, und eine Schulter (50) umfasst, die in der vollständig zusammengebauten Position des Verriegelungselements mit der Nase an dem Gehäuse des Buchsenverbinders in Eingriff steht, um die Stecker- und Buchsenverbinder in einer vollständig zusammengefügten Position zu halten, **dadurch gekennzeichnet, dass** die Nase (38) an dem Gehäuse (26) des Steckerverbinders (14) mit der Verriegelungsnase (60) in der vormontierten Position des Vemiegelungselements (44) in Eingriff gelangen kann, um den Schnappsitz der Verriegelungsnase mit der ersten Kante (61) zu lösen.

2. Zweiteiliger elektrischer oder optischer Verbinder nach Anspruch 1, wobei das Verriegelungselement (44) ein Wandelement (52) und einen elastischen Verriegelungsarm (54) umfasst, die nebeneinander und voneinander beabstandet in der axialen Richtung (A) angeordnet sind, wobei die Verriegelungsnase (60) an dem freien Ende des Verriegelungsarms angeordnet ist, und die Schulter (50) an dem Wandelement gebildet ist.

3. Zweiteiliger elektrischer oder optischer Verbinder nach Anspruch 1 oder Anspruch 2, wobei das Verriegelungselement (44) einen Kanal (56) mit einem offenen Ende (58) zur Aufnahme der Nase (38) an dem Gehäuse (26) des Steckerverbinders (14) umfasst, wobei der Kanal eine abgewinkelte Seitenkante aufweist, die die Schulter (50) definiert, die mit der die Nase in Eingriff gelangen kann.

4. Zweiteiliger elektrischer oder optischer Verbinder nach Anspruch 3, wobei das offene Ende (58) des Kanals (56) und die Verriegelungsnase (60) in der axialen Richtung ausgerichtet sind.

5. Zweiteiliger elektrischer oder optischer Verbinder nach einem der Ansprüche 1 bis 4, wobei die erste Kante (61) durch eine erste Öffnung (60) in dem Gehäuse (16) des Buchsenverbinders (12) definiert ist, und die zweite Kante (63) durch eine zweite Öffnung (64) in dem Gehäuse des Buchsenverbinders definiert ist, wobei die erste und die zweite Öffnung in einer Richtung im Wesentlichen senkrecht zu der axialen Richtung (A) beabstandet sind.
